# EUROPEAN PATENT APPLICATION

(11) **EP 1 096 825 A1**
(43) Date of publication of application: **02.05.2001**
(21) Application number: 99830670.8
(22) Date of filing: 25.10.1999
(51) Int. Cl.: H04Q 7/38, H04M 15/00

(54) **Process and system for selecting a mobile radio telephone network provider**

(71) Applicant: Cardillo, Andrea, Vercelli (VC) (IT); Sarasso, Stefano, Caresanablot (VC) (IT)
(72) Inventor: Cardillo, Andrea, Vercelli (VC) (IT); Sarasso, Stefano, Caresanablot (VC) (IT)
(74) Representative: Pizzoli, Antonio

(57) **Abstract**

Process for selecting a radio mobile telephone network provider (Sn) from a mobile radio apparatus (5), which comprises the following operative steps:
- identifying a time period (Tn) of an absolute time reference;
- identifying one or more available secondary network providers (Sn);
- selecting from at least one cost table (Cn) comprising a plurality of cost indexes (Cl), each of them corresponding to a time period (Tn) and to a secondary network provider (Sn), one or more cost indexes (Cl) corresponding to said identified time period (Tn);
- selecting by means of an algorithm a cost index (CI) among said cost indexes (CI) corresponding to said identified time period (Tn);
- selecting the available network provider (Sn) corresponding to said selected cost index (CI).

The present invention also relates to a system which carries out said process.

## Description

The present invention relates to a process for selecting a mobile radio telephone network provider, and in particular to a process that can be used for guiding in an optimal way the users of mobile radio apparatuses in the selection of a secondary network provider through which calls can be placed or received outside the geographical area covered by the main network provider thereof. The present invention also relates to a system which carries out said process.

It is known that most of the mobile radio telephone apparatuses are enabled, according to a process commonly known with the name *roaming*, to the connection with secondary network providers differing from the main provider with which the user directly subscribed at least one provision contract for communication services. If said apparatuses are not located in the geographical area covered by the own main network provider, it is possible to manually or automatically select an alternative network provider, and thus start a registration process via radio of the mobile radio apparatus in the database of the network of this secondary provider, so as to use the communication services thereof.

This selection, which is generally necessary when the user is abroad, is carried out among all the secondary network providers available at the moment, that is all those providers which not only assure a sufficient network covering in the geographical area where the user is located, but also have entered a roaming agreement between the main network provider of the user himself.

If the manual selection is set in the mobile radio apparatus, the user can select the secondary network provider among those available at the moment, and then proceed with the registration. If instead the automatic selection is set, the mobile radio apparatus selects the secondary network provider for registering therewith according to the quality of the identification signal of the available networks.

However, in these known processes the user cannot disadvantageously select the most convenient available secondary network provider, in particular in terms of communication costs. As a matter of fact, the object of all known processes is to assure the service continuity, apart from the charges which each network provider applies in case of roaming, i.e. not considering the costs that the user of a mobile radio apparatus must bear for registering and using the services offered by a mobile radio telephone network provider different from the own one. Furthermore, the information relating to said costs are generally difficult to be found and analyzed by the user.

An object of the present invention is therefore to provide a process and a system for selecting a mobile radio telephone network provider, which are free from the above mentioned disadvantages, thus allowing the user to select the most convenient network provider, in an automatic way, if desired. Said object is achieved by means of a process and a system, the main features of which are respectively disclosed in claims 1 and 11, while other features are disclosed in the dependent claims.

Thanks to the cost tables comprising a plurality of cost indexes of an incoming or outgoing call through the secondary network providers, the users of the mobile radio apparatuses can select the most convenient network provider through the process according to the present invention.

This process can be advantageously carried out in a manual manner wherein the users can control the most important operative steps, or in an automatic manner, wherein the users use the mobile radio apparatus as usual, thereby leaving the control of the operative steps to the apparatus itself.

Furthermore, said cost tables can be transmitted to the mobile radio apparatuses from a host computer, which contains a general table divided into geographical areas and network providers, so that the user can select, if desired, only the cost tables of his interest, for instance those relating to the network providers which are active in a foreign country. The same transfer of the cost tables to the mobile radio apparatuses may be subject to a charge or to a rent, so as to cover the expenses necessary for the continuous update of the same tables carried out by the host computer administrator.

Thanks to the reference digital clock provided in the mobile radio apparatuses, it is further possible to identify the time periods of the cost tables independently from the local time in the different geographical areas, so as to allow a perfect adjustment of the process and the system according to the present invention to the changes of the charges applied by the network providers according to the current time.

Another advantage of the process and the system according to the present invention consists in that they can be easily applied to the present mobile radio telephone standards, and in particular to the digital type standards, such as for instance GSM, DECT and UMTS standards.

Further advantages and features of the process and the system according to the present invention will become clear to those skilled in the art from the following detailed description of some embodiments thereof referring to the attached drawing wherein:
- figure 1 shows a schematic view of a system which carries out the process according to the present invention; and
- figure 2 shows a flow chart of the process of figure 1.

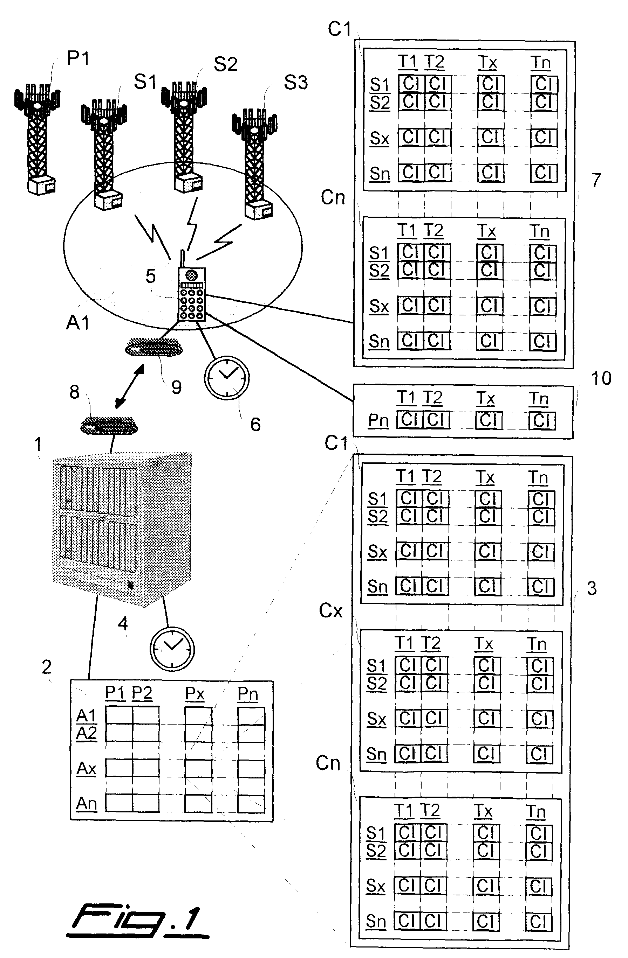

Referring to figure 1, it is seen that a system according to the present invention comprises at least one host computer 1 of the known kind, which is provided with an electronic processor and a digital memory. In this memory it is suitably stored at least one general table 2 comprising two orthogonal lists, a first list of codes identifying the main network providers Pn which offer mobile radio telephone services and a second list of codes identifying the geographical areas An, in particular foreign countries or portions thereof divided into time zones, wherein there is at least one secondary network provider which subscribed a roaming agreement with one or more of said main network providers Pn. In the correspondent intersection between each of said identification codes of the main network providers Pn and of the geographical areas An, general table 2 comprises a group 3 of one or more cost tables Cn or it is void if a particular main network provider did not subscribe any roaming agreement with secondary network providers in a particular geographical area.

Cost tables Cn of group 3 identified by a particular main network provider Px and by a particular geographical area Ax comprise two orthogonal lists, a first list of codes identifying all the secondary network providers Sn which offer mobile radio telephone services in the geographical area Ax and subscribed a roaming agreement with main network provider Px, as well as a second list of codes identifying the time periods Tn which correspond to the different time intervals into which the schedules of charges of secondary network providers Sn are divided. In the correspondent intersection between each identification code of the secondary network providers Sn and of the time periods Tn, each cost table Cn comprises at least one index CI indicating the cost of an incoming or outgoing call through said secondary network providers Sn in the time periods Tn.

In particular, cost index CI consists of a number proportional or substantially corresponding to the average charge of a call in a sample time period, for instance 1 minute. Said number is for instance obtained by means of a statistical analysis of the schedules of charges of the different secondary network providers Sn, according to the mark-up, if any, of the main network providers Pn. Furthermore, time periods Tn, for instance divided into 48 time periods of 30 minutes each, are calculated according to an absolute time reference, in particular the Greenwich Mean Time or GMT. For this purpose, host computer 1 can he provided with a digital reference periodic counter 4, in particular a digital clock synchronized with the GMT.

The presence of more cost tables Cn in a group 3 of tables which is identified by a particular main network provider Px and a particular geographical area Ax, is caused by the fact that the charges, and therefore the cost indexes CI of the calls in the schedule of charges of the different secondary network providers Sn, may change according to the geographical area, i e. the code number, of the telephone number called. Furthermore, some cost tables Cn can be referred not to the outgoing call charges, but to the incoming call charges, since in the roaming agreements some charges are generally provided also for the calls received by a mobile radio apparatus.

Therefore, a list of cost indexes CI relating to the charges of the telephone calls through the correspondent secondary network providers Sn are associated to a particular main network provider Px, a particular geographical area Ax, a particular cost table Cx, for instance the table relating to the outgoing calls to telephone numbers belonging to the same geographical area Ax, and a particular time period Tx.

The system according to the present invention further comprises at least one mobile radio apparatus 5, for instance a GSM cellular telephone, which, in addition to the main electronic processor and further electronic means generally present in the known apparatuses, is provided with a digital reference periodic counter 6, in particular a digital clock synchronized with the GMT, and a digital memory in which a group 7 of one or more cost tables Cn of the same kind of those stored in host computer 1, is stored.

Said group 7 of cost tables Cn can be transferred from the memory of host computer 1 to the memory of mobile radio apparatus 5 in different ways and in different moments, for instance through a pair of modems 8, 9, the first of which is connected to host computer 1, and the second of which is connected to the mobile radio apparatus 5, preferably integrated therein.

First of all, during the use, the process according to the present invention comprises a first step wherein general table 2 comprising the groups 3 of cost tables Cn is stored in host computer 1. Said table is continuously updated by an operator at each change of the schedules of charges or roaming agreements of the main Pn and secondary Sn network providers.

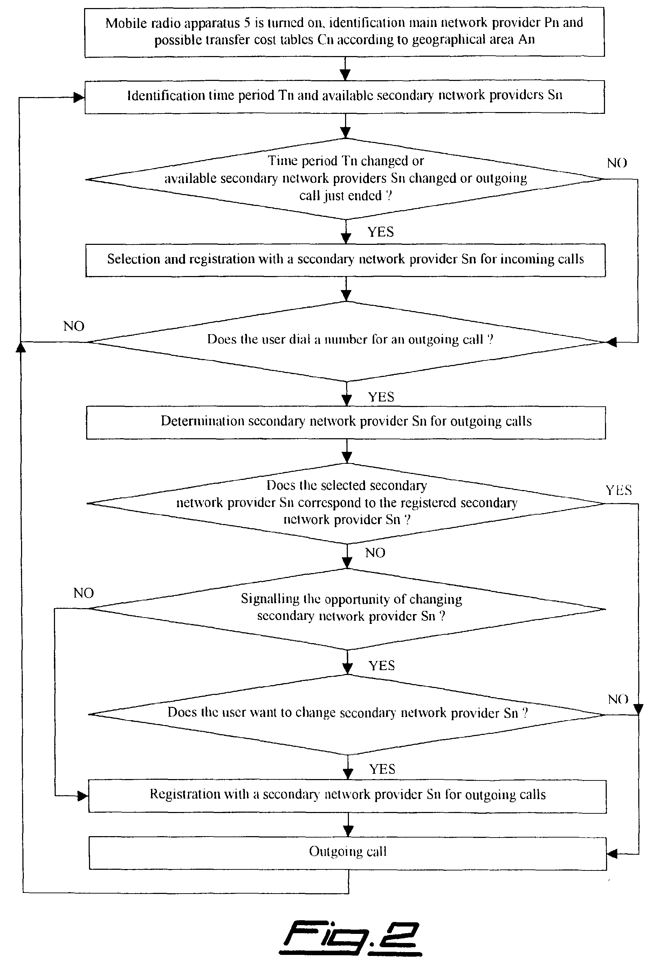

Referring now also to figure 2, it is seen that a mobile radio apparatus 5, when it is turned on, identifies its own main network provider Pn, for instance network provider P1 symbolized in the figure with a radio antenna. Said identification can be carried out, in the GSM standard, by reading the identification code of the main network provider contained in the memory inserted into the SIM card supplied by the provider itself. Furthermore, the geographical area An in which the apparatus itself is located at the moment, for instance geographical area A1 symbolized in the figure with an ellipse, can he also identified and stored in a digital memory of mobile radio apparatus 5. This identification function is already comprised in a protocol of the GSM standard, however, if it could not be available, the user can manually insert, in particular through the keyboard of mobile radio apparatus 5, an identification code of the geographical area, for instance the country code corresponding to this geographical area.

In the example shown in the figure, geographical area A1 is not covered by main network provider P1 of mobile radio apparatus 5, but it is covered by a plurality of secondary network providers Sn, in particular network providers S1, S2 and S3, also symbolized in the figure with a radio antenna. At the start, mobile radio apparatus 5 generally scans the different radio frequencies for detecting the identification signals of the available network providers, so that in the present example it recognizes said secondary network providers S1, S2 and S3, not its own main network provider P1.

At an explicit request of the user or according to an automatic order, mobile radio apparatus 5 can now register itself to a secondary network provider Sn, for instance the one with the better identification signal, and connect to host computer 1 through modems 8, 9, for transferring in table 7 of the digital memory of mobile radio apparatus 5 one or more cost tables Cn corresponding to one or more geographical areas An and to main network provider Pn, for instance to geographical area A1 and to main network provider P1. Through this connection between mobile radio apparatus 5 and host computer 1 a further synchronization between digital periodic counters 4 and 6 can also be carried out.

In other embodiments of the present invention cost tables Cn can be stored in mobile radio apparatus 5 in other ways and/or other moments, for instance they can be inserted manually or by means of a remote connection through its own network provider before going to the interested geographical areas. Furthermore, the transfer of cost tables Cn can be suitably subject to the payment of a charge or a rent to the administrator of host computer 1.

Once cost tables Cn are transferred to the memory of mobile radio apparatus 5, the electronic processor which controls the apparatus itself identifies the identification codes of the available secondary network providers Sn, which can also change at any time if the relevant identification signals are received or not, as well as the current time period Tn through digital periodic counter 6.

If time period Tn or the available secondary network providers Sn change, or if an outgoing call from mobile radio apparatus 5 has just ended, the electronic processor of the latter carries out a selection of a particular secondary network provider Sn and registers itself therewith, so as to place or receive calls.

This selection of secondary network provider Sn is carried out by the electronic processor of mobile radio apparatus 5 by selecting in table 7 the cost table Cn relating to the charges of the incoming calls and then identifying the cost indexes CI relating to the current time period Tn and to the available secondary network providers Sn. Once said cost indexes CI have been identified, mobile radio apparatus 5 determines according to a particular algorithm, for instance a known algorithm which provides the lowest cost index Cl among the identified ones, the most convenient secondary network provider Sn available for receiving incoming calls. Said algorithm can also comprise a selection of cost indexes CI according to the quality of the identification signals of the available secondary network providers Sn, so as to select for instance the most convenient network provider only among those providing an identification signal having a quality higher than a predetermined threshold level.

At this stage, the process according to the present invention provides for a waiting cycle for incoming calls, if any, which starts again from the operative step of identifying the current time period Tn and the identification codes of the available secondary network providers Sn, with a possible registration to another available secondary network provider Sn if in the meanwhile some changes if the operative conditions have occurred.

If the user instead dials a telephone number for placing an outgoing call, mobile radio apparatus 5 selects in table 7 a cost table Cn relating to the charges of the outgoing calls to the geographical area identified by the code number of this telephone number. According to the selected cost table Cn, mobile radio apparatus 5 identifies the cost indexes CI relating to the current time period Tn and to the available secondary network providers Sn. Once said cost indexes CI have been identified, mobile radio apparatus 5 determines according to a particular algorithm, for instance a known algorithm which provides the lowest cost index CI among the identified ones, the most convenient secondary network provider Sn available for placing an outgoing call. Also said algorithm can comprise a selection of cost indexes Cl according to the quality of the identification signals of the secondary network providers Sn available at the moment.

If the secondary network provider Sn determined through said algorithm corresponds to the secondary network provider Sn to which mobile radio apparatus 5 is already registered, the outgoing call is placed and the process subsequently starts again from the operative step of identifying the current time period Tn and the identification codes of the available secondary network providers Sn. Otherwise, mobile radio apparatus 5 automatically registers itself to the new secondary network provider Sn or signals to the user, for instance through a signal on the display of the same apparatus, the opportunity of changing secondary network provider Sn for the outgoing call. In the latter case, the user can decide whether remaining registered to the secondary network provider Sn for the incoming calls or moving to the most convenient secondary network provider Sn for the outgoing call, after which the outgoing call is placed and the process starts again from the operative step of identifying the current time period Tn and the identification codes of the available secondary network providers Sn.

The memory of mobile radio apparatus 5 can further comprise a table 10 containing some cost indexes Cl programmable by the user, each of them being associated to a time period Tn. In said cost indexes Cl programmable by the user the charges applied to the user by main network provider Pn can be stored so that, if the latter network provider is available, the selection algorithm of the process according to the present invention can also comprise a comparison between cost indexes Cl of main network provider Pn and those of the available secondary network providers Sn.

In fact, it might occur that for placing or receiving a call, a secondary network provider Sn could be more convenient than main provider Pn, wherein the mobile radio apparatus could register itself in a manual or automatic way to secondary network provider Sn by means of the process according to the present invention.

In the present embodiment of the invention cost indexes Cl contained in cost tables Cn are proportional and/or substantially correspond to the charges of the incoming or outgoing calls converted into a reference international currency, however in other embodiments of the invention cost indexes Cl can be calculated according not only to said charges hut also to other parameters which may influence the cheapness for the users of a call through a network provider, for instance the coverage ratio on the territory, the presence of discounts and/or minimum charges for a call, the number of subscribers, the traffic intensity, etc.

In another embodiment of the present invention the selection of secondary network provider Sn is carried out by the processor of host computer 1 and not the one of mobile radio apparatus 5. In this case, host computer 1 does not transmit to mobile radio apparatus 5 cost tables Cn, but only the identification code of the most convenient secondary network provider Sn at the moment, after having received from mobile radio apparatus 5 the information relating to geographical area An and the available secondary network providers Sn.

## Claims

1. Process for selecting a radio mobile telephone network provider (Sn) from a mobile radio apparatus (5), characterized in that it comprises the following operative steps:
- identifying a time period (Tn) of an absolute time reference;
- identifying one or more available secondary network providers (Sn);
- selecting from at least one cost table (Cn) comprising a plurality of cost indexes (Cl), each of them corresponding to a time period (Tn) and to a secondary network provider (Sn), one or more cost indexes (CI) corresponding to said identified time period (Tn);
- selecting by means of an algorithm a cost index (CI) among said cost indexes (CI) corresponding to said identified time period (Tn);
- selecting the available network provider (Sn) corresponding to said selected cost index (CI).

2. Process according to the previous claim, characterized in that said cost indexes (CI) are proportional and/or substantially correspond to the call charges through said network providers (Sn) and that said algorithm provides the lowest cost index (Cl) among those corresponding to said identified time period (Tn).

3. Process according to one of the previous claims, characterized in that said algorithm comprises a selection of the cost indexes (Cl) according to the quality of the identification signals of the available secondary network providers (Sn).

4. Process according to one of the previous claims, characterized in that said algorithm comprises a comparison between the cost indexes (Cl) of the main network provider (Pn) and those of the secondary network providers (Sn).

5. Process according to one of the previous claims, characterized in that said cost indexes (CI) are calculated according to a plurality of parameters which influence the cheapness for the users of a call through a network provider.

6. Process according to one of the previous claims, characterized in that it comprises a selection of a cost table (Cn) among a plurality of cost tables (Cn) according to the kind of call outgoing from the apparatus itself.

7. Process according to one of the previous claims, characterized in that it comprises a selection of a cost table (Cn) relating to the calls incoming in said apparatus (5).

8. Process according to one of'the previous claims, characterized in that it further comprises the following operative steps:
- identifying the geographical area (An) in which said mobile radio apparatus (5) is located;
- identifying the main network provider (Pn) of said mobile radio apparatus (5);
- transmitting from said mobile radio apparatus (5) to a host computer (1) the identification codes of said identified geographical area (An) and said identified main network provider (Pn).

9. Process according to the previous claim, characterized in that it further comprises the following operative steps:
- transmitting from said mobile radio apparatus (S) to said host computer (1) the identification codes of the available secondary network providers (Sn);
- selecting an available secondary network provider (Sn) according to the identification codes of said identified geographical area (An), of said identified main network provider (Pn) and of said available secondary network providers (Sn);
- transmitting from said host computer (1) to said mobile radio apparatus (5) the identification code of the selected available secondary network provider (Sn).

10. Process according to one of the previous claims, characterized in that it one or more cost tables (Cn) are selected from at least one general table (2) stored in said host computer (1), are transmitted to said mobile radio apparatus (5) and are stored in the latter.

11. System for carrying out the process according to one of the previous claims, characterized in that it comprises at least one mobile radio apparatus (5) provided with at least one electronic processor, and a host computer (1) which is provided with at least one electronic processor and a digital memory suitable for containing a general table (2) which includes at least one group (3) of one or more cost tables (Cn) comprising a plurality of cost indexes (Cl).

12. System according to the previous claim, characterized in that said mobile radio apparatus (5) and said host computer (1) can be mutually linked through a pair of moderns (8, 9).

13. System according to claim 1 or 12, characterized in that said mobile radio apparatus (5) is provided with a digital memory suitable for containing one or more cost tables (Cn) comprising a plurality of cost indexes (Cl), one of which can be selected by means of an algorithm carried out by the electronic processor of the same mobile radio apparatus (5) among the cost indexes (CI) corresponding to a time period (Tn) of an absolute time reference.

14. System according to one of claims 1 to 13, characterized in that one of the cost indexes (CI) comprised in one of said cost tables (Cn) stored in said host computer (1) can be selected by means of an algorithm carried out by the electronic processor of the same host computer (1) among the cost indexes (CI) corresponding to a time period (Tn) of an absolute time reference.

15. System according to claim 13 or 14, characterized in that said time period (Tn) is identified by at least one reference periodic counter (4, 6), in particular consisting in a digital clock synchronized with the GMT, arranged in said host computer (1) and/or in said mobile radio apparatus (5).

16. System according to one of claims 11 to 15, characterized in that the memory of the mobile radio apparatus (5) comprises a table (10) containing some cost indexes (Cl) programmable by the user, each of them being associated to a time period (Tn) of an absolute time reference.

17. Process or system according to one of the previous claims, characterized in that said cost tables (Cn) comprise two orthogonal lists, a first list of identification codes of secondary network providers (Sn) in a geographical area (An) and a second list of identification codes of time periods (Tn) which correspond to the different time intervals into which the schedules of charges of the secondary network providers (Sn) are divided, wherein in the correspondent intersection between each identification code of the secondary network providers (Sn) and of the time periods (Tn), each cost table (Cn) comprises at least one cost index (Cl).

18. Process or system according to one of the previous claims, characterized in that said general table (2) comprises two orthogonal lists, a first list of identification codes of main network providers (Pn) and a second list of identification codes of geographical areas (An) wherein there is at least one secondary network provider which subscribed a roaming agreement with one or more of said main network providers (Pn), wherein in the correspondent intersection between each identification code of the main network providers (Pn) and of the geographical areas (An), the general table (2) comprises a group (3) of one or more cost tables (Cn) or it is void if a particular main network provider did not subscribe any roaming agreement with secondary network providers in a particular geographical area.
